# EUROPÄISCHE PATENTSCHRIFT

(11) **EP 2 687 318 B1**
(45) Veröffentlichungstag und Bekanntmachung des Hinweises auf die Patenterteilung: **14.01.2015**
(21) Anmeldenummer: 12176930.1
(22) Anmeldetag: 18.07.2012
(51) Int. Cl.: B23K 26/26, B23K 26/20, B23K 26/32, B23K 26/28

(54) **Verfahren zum Fügen zweier Bauteile mittels eines Schweissprozesses unter Verwendung eines Zwischenteils**
Method of joining two components together by means of a welding process using an intermediate parts
Procédé d'assemblage de deux composants au moyen d'un procédé de soudage utilisant une pièce intermédiaire

(43) Veröffentlichungstag der Anmeldung: 22.01.2014
(73) Patentinhaber: Emerson Climate Technologies GmbH, 71332 Waiblingen (DE)
(72) Erfinder: Fuhrmann, Christian, Dr., 41569 Rommerskirchen (DE)
(74) Vertreter: Manitz, Finsterwald & Partner GbR

(56) Entgegenhaltungen:
- GB-A- 797 847
- GB-A- 1 233 311
- JP-A- 2000 135 570
- US-A- 1 988 422
- US-A1- 2009 001 060

## Beschreibung

Die Erfindung betrifft ein Verfahren zum Fügen zweier Bauteile mittels eines Laserschweißprozesses, wobei wenigstens eines der Bauteile eine Messinglegierung aufweist.

Das Fügen von Bauteilen mittels Schweißen ist grundsätzlich bekannt. Allerdings erweist sich das Schweißen von Messing aufgrund des darin enthaltenen Zinks, welches während des Schweißprozesses verdampft, als problematisch. Insbesondere mittels konventioneller Lichtbogenschweißverfahren lassen sich nur sehr schwer qualitativ hochwertige Schweißungen von Messingbauteilen realisieren, da es immer wieder zu explosionsartigen Zinkverdampfungen kommt. Das Gleiche gilt beim Laserschweißen von Messing: mit einem fokussierten Laserstrahl verdampft ein großer Anteil des Zinks in der Schmelze, so dass ein tiefer Schnitt in der Schweißung entsteht. Wird hingegen mit einem defokussiertem Laserstrahl gearbeitet, verbreitert sich die Schweißung und die explosionsartigen Zinkverdampfungen werden verringert, doch wird gleichzeitig auch die Einschweißtiefe auf nur wenige Zehntel Millimeter reduziert. Erschwerend kommt hinzu, dass die Laserstrahlung von Messing unter Umständen nur geringfügig absorbiert wird und dadurch eine deutlich höhere Laserleistung benötigt wird, als beispielsweise beim Schweißen von Stahl.

Ein Verfahren zum Fügen von Messingbauteilen mittels Laserschweißen gemäß dem Oberbegriff des Anspruchs 1 ist aus der US 2009/0001060 A1 bekannt. Verfahren zum Fügen von Messingbauteilen mittels Widerstandsschweißverfahren sind in der GB 1 233 311 A, US 1 988 422 A, GB 797 847 A und JP 2000 135 570 A beschrieben.

Der Erfindung liegt die Aufgabe zugrunde, ein verbessertes Verfahren zum Laserschweißen von Messing zu schaffen.

Die Aufgabe wird durch ein Verfahren mit den Merkmalen des Anspruchs 1 gelöst.

Konkret besteht die Erfindung darin, dass ein Zwischenteil, welches aus einem Material gebildet ist, das zumindest eine der folgenden Legierungen umfasst: CuSn4, CuSn6, CuSn8, CuSn10 und CuSn12, zwischen den zu fügenden Bauteilen derart angeordnet wird, dass es in Randbereichen mit den Bauteilen in Kontakt steht, und während des Schweißprozesses mittels eines von einem Laser erzeugten Laserstrahls derart erwärmt wird, dass es in den Randbereichen eine stoffschlüssige Verbindung mit den Bauteilen eingeht.

Das Zwischenteil aus Nichtmessing dient mit anderen Worten als Fügemedium, gewissermaßen also als Haftvermittler, für die zu verbindenden Bauteile. Die Verwendung des Zwischenteils ermöglicht es somit, auch Messing enthaltende Bauteile mittels eines Laserschweißprozesses zuverlässig und insbesondere gasdicht zu verschweißen.

Da der Schweißprozess mittels eines von einem Laser erzeugten Laserstrahls durchgeführt wird, lässt sich der Energieeintrag während des Schweißprozesses örtlich auf das Zwischenteil beschränken und eine unerwünschte Verdampfung von Zink aus dem Messingbauteil vermeiden oder zumindest auf ein Minimum reduzieren.

Hierdurch kann das erfindungsgemäße Verfahren vorteilhafterweise auch dort eingesetzt werden, wo das Laserschweißverfahren aufgrund seiner geringeren Wärmeeinbringung Vorteile gegenüber herkömmlichen Lichtbogenschweißverfahren aufweist, so dass z.B. keine inneren Bauelemente beschädigt werden, wie beispielsweise beim Fügen von Ventilkomponenten.

Dadurch dass das Zwischenteil eine Bronzelegierung aufweist, zeichnet sich das Zwischenteil durch eine besonders wirksame Energieeinkopplung während des Schweißprozesses aus, so dass während des Schweißprozesses mit geringeren Leistungen gearbeitet werden kann und allenfalls eine minimale Verdampfung von Zink stattfindet. Trotzdem ist eine Schweißverbindung realisierbar, die mehrere Millimeter tief sein kann. Dabei verschmilzt die Bronze in den Randbereichen mit dem Messing zu einer homogenen intermetallischen Phase, wodurch eine mechanisch besonders stabile und gasdichte Verbindung der zu fügenden Bauteile erreicht wird.

Ein Zwischenteil aus CuSn12 hat sich beim Laserschweißen von Messingbauteilen als besonders vorteilhaft erwiesen.

Vorteilhafte Ausbildungen der Erfindung sind den Unteransprüchen, der Beschreibung und der Zeichnung zu entnehmen.

Sind die zu fügenden Bauteile im Bereich der Fügestelle rotationssymmetrisch ausgebildet, ist das Zwischenteil vorzugsweise ringförmig oder lochscheibenförmig ausgebildet. Sollen dagegen plattenförmige Bauteile oder Bleche z.B. im Stumpfstoß verschweißt werden, kann das Zwischenteil streifenförmig ausgebildet sein. In beiden Fällen kann die Stärke des Zwischenteils im Bereich von 0,1 mm bis 2 mm liegen, wobei grundsätzlich auch eine Verwendung dünnerer Bronzefolien vorstellbar ist.

Um einer während des Schweißprozesses unter Umständen auftretenden Materialverdampfung Rechnung zu tragen, wird das Zwischenteil bevorzugt so dimensioniert und/oder so zwischen den Bauteilen positioniert, dass es vor dem Schweißprozess über die Bauteile hinausragt. Auf diese Weise lässt sich eine zumindest annähernd nahtunterwölbungsfreie Fügestelle zwischen den gefügten Bauteilen realisieren.

Wie bereits angedeutet, eignet sich das erfindungsgemäße Verfahren besonders gut zum Fügen von zwei Bauteilen, die beide aus Messing hergestellt sind, beispielsweise Ventilkomponenten. Grundsätzlich ist es mittels des erfindungsgemäßen Verfahrens aber auch möglich, zwei Bauteile zu fügen, von denen nur eines eine Messinglegierung aufweist, während das andere ein anderes Metallmaterial aufweist, wie beispielsweise Stahl oder Kupfer.

Gemäß einer Ausführungsform können die Bauteile zumindest im Bereich der Fügestelle rotationssymmetrisch ausgebildet sein, beispielsweise rohrförmig. Alternativ ist es aber auch möglich, zwei Bleche im Stumpfstoß miteinander zu verschweißen. Grundsätzlich lassen sich mittels des erfindungsgemäßen Verfahrens beliebig ausgestaltete dreidimensionale Bauteile miteinander zu verschweißen.

Vorteilhafterweise wird der Laserstrahl ausschließlich auf einen freiliegenden Bereich des Zwischenteils gerichtet, d.h. er tritt direkt in das Zwischenteil ein, insbesondere ohne vorher eines der zu fügenden Bauteile zu durchdringen.

Um den Energieeintrag in das Zwischenteil und somit das Aufschmelzen des Zwischenteils weiter zu optimieren, kann der Laserstrahl mittels einer Doppelfokusoptik in zwei Teilstrahlen aufgespalten werden. Alternativ kann der Schweißprozess auch mittels eines defokussierten Laserstrahls durchgeführt werden. Ferner kann der Schweißprozess mittels eines pendelnden Laserstrahls durchgeführt werden.

Nachfolgend wird die Erfindung rein beispielhaft anhand möglicher Ausführungsformen unter Bezugnahme auf die Zeichnung beschrieben. Es zeigen:
- Fig. 1: eine Schnittansicht zweier mittels Laserschweißen zu fügender Bauteile (a) zu Beginn des Schweißprozesses und (b) nach Beendigung des Schweißprozesses; und
- Fig. 2: eine perspektivische Explosionsansicht zweier mittels Laserschweißen zu fügender Bauteile sowie eines als Fügemittel dienenden Zwischenteils.

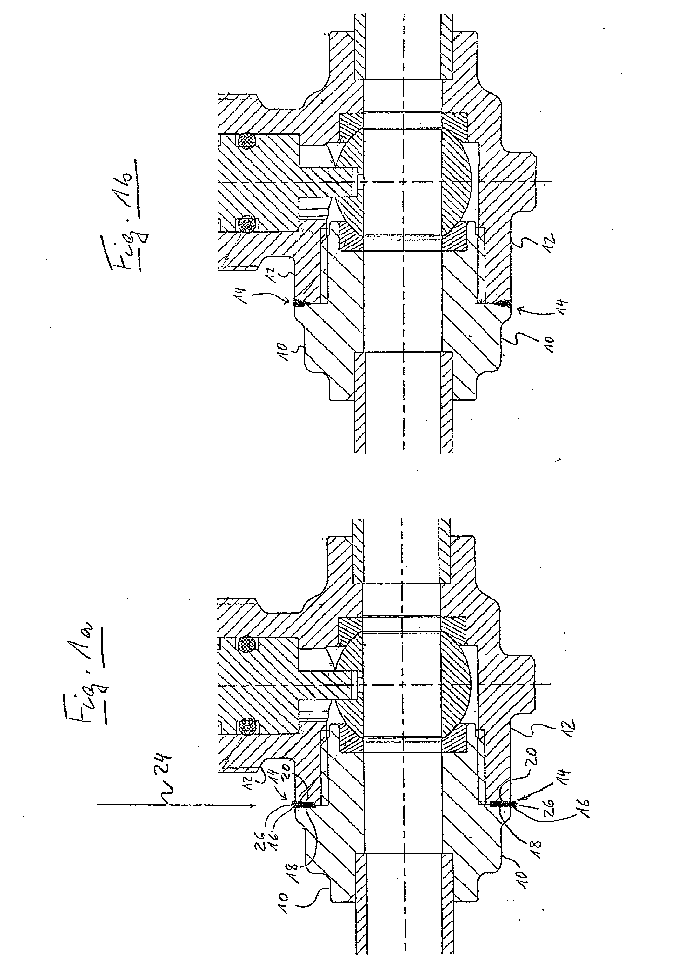

In Fig. 1 sind zwei jeweils aus einer Messinglegierung gebildete Bauteile 10, 12 dargestellt, die mittels Laserschweißen gefügt werden sollen. Bei den Bauteilen 10, 12 kann es sich beispielsweise Komponenten eines Ventils, eines Wasserhahns, eines Messinstruments oder auch um Abschnitte von Rohrleitungen handeln, welche zumindest im Bereich der Fügestelle 14 rotationssymmetrisch ausgebildet sind.

Im Bereich der Fügestelle 14 ist ein Zwischenteil in Form eines Bronzerings 16 zwischen den Bauteilen 10, 12 derart angeordnet, dass ein erster Randbereich 18 des Bronzerings 16 mit dem einen Bauteil 10 und ein gegenüberliegender zweiter Randbereich 20 des Bronzerings 16 mit dem anderen Bauteil 12 in Kontakt steht.

Das Einlegen des Bronzerings 16 zwischen die Bauteile 10, 12 kann beispielsweise automatisiert mittels eines geeigneten Greifwerkzeugs einer Vorrichtung geschehen, in welcher die Bauteile 10, 12 zuvor eingespannt wurden.

Die Stärke des Bronzerings 16 beträgt im vorliegenden Ausführungsbeispiel etwa 0,5 mm, kann aber auch größer oder kleiner sein. In radialer Richtung gesehen beträgt die Tiefe des Bronzerings 16 im vorliegenden Ausführungsbeispiel etwa 2 mm. Ähnlich wie die Stärke des Bronzerings 16 kann aber auch dessen Tiefe je nach Anwendung variieren.

Der Außendurchmesser des Bronzerings 16 ist idealerweise etwas größer als die Außendurchmesser der zu fügenden Bauteile 10, 12 im Bereich der Fügestelle 14, so dass der Bronzering 16 im Bereich der Fügestelle 14 geringfügig über die Bauteile 10, 12 hinausragt. Dies ist aber nicht zwingend notwendig. Stattdessen könnte der Außendurchmesser des Bronzerings 16 auch genauso groß wie oder kleiner als der Außendurchmesser der zu fügenden Bauteile 10, 12 im Bereich der Fügestelle 14 sein.

Zum Verschweißen der Bauteile 10, 12 wird ein Laserstrahl 24, z.B. ein von einem Nd:YAG-Laser emittierter Laserstrahl mit einer Wellenlänge von 1,06 µm, auf die freiliegende Außenseite 26 des Bronzerings 16 gerichtet. Durch eine umlaufende Bewegung des Laserstrahls 24 relativ zum Bronzering 16 wird der Energieeintrag in den Bronzering 16 so gesteuert, dass der Bronzering 16 in seinen Randbereichen 18, 20 über zumindest annähernd die gesamte Tiefe des Bronzerings 16 in radialer Richtung gesehen aufschmilzt und sich mit dem Material der Bauteile 10, 12 zu einer homogenen intermetallischen Phase verbindet. Dass der Laserstrahl 24 nicht direkt auf die Messingbauteile 10, 12 gerichtet wird, sondern eine Fokussierung des Energieeintrags auf den Bronzering 16 erfolgt, trägt dazu bei, dass eine unerwünschte Verdampfung von Zink aus dem Messing der Bauteile 10, 12 weitgehend vermieden wird.

Das Ergebnis des Schweißprozesses ist eine qualitativ hochwertige und insbesondere gasdichte Schweißverbindung der Bauteile 10, 12, welche darüber hinaus mit einer vergleichsweise geringen Materialverdampfung einhergeht (Fig. 1b).

Während voranstehend das Schweißen von rotationssymmetrisch ausgebildeten Bauteilen 10, 12 beschrieben wurde, sei abschließend darauf hingewiesen, dass sich grundsätzlich beliebig dreidimensional geformte Bauteile schweißen lassen.

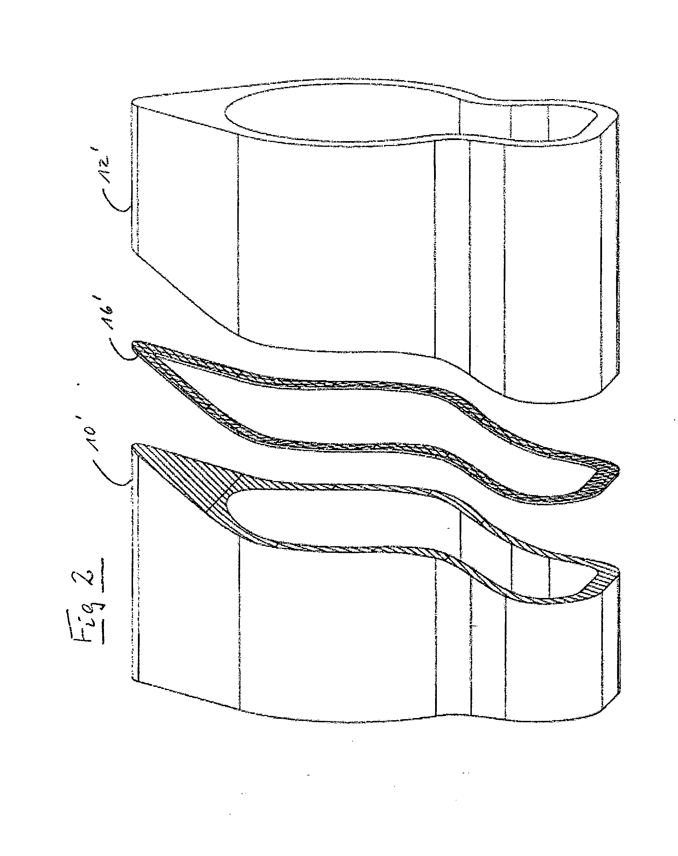

So zeigt Fig. 2 beispielsweise zwei jeweils eine Messinglegierung aufweisende Bauteile 10', 12' in Form von nicht rotationssymmetrisch ausgebildeten Hohlprofilen, die mittels eines entsprechend geformten Bronzerings 16' verschweißt werden können. Dieser Ausführungsform ist insbesondere auch zu entnehmen, dass sich der Bronzering 16' nicht notwendigerweise in einer Ebene erstrecken muss, sondern dass sich auch die Schweißung dreidimensional erstrecken kann.

Darüber hinaus lassen sich natürlich auch plattenförmige Bauteile oder Bleche z.B. im Stumpfstoß miteinander verschweißen. Bei diesen wäre das Zwischenteil dann entsprechend in Form eines Bronzestreifens ausgebildet.

### Bezugszeichenliste

- 10: Bauteil
- 12: Bauteil
- 14: Fügestelle
- 16: Bronzering
- 18: Randbereich
- 20: Randbereich
- 24: Laserstrahl
- 26: Außenseite

## Patentansprüche

1. Verfahren zum Fügen zweier Bauteile (10, 12), von denen mindestens eines eine Messinglegierung aufweist, mittels eines Laserschweißprozesses,
**dadurch gekennzeichnet, dass** ein Zwischenteil (16), welches aus einem Material gebildet ist, das zumindest eine der folgenden Legierungen umfasst: CuSn4, CuSn6, CuSn8, CuSn10 und CuSn12, zwischen den Bauteilen (10, 12) derart angeordnet wird, dass es in Randbereichen (18, 20) mit den Bauteilen (10, 12) in Kontakt steht, und während des Schweißprozesses mittels eines von einem Laser erzeugten Laserstrahls (24) derart erwärmt wird, dass es in den Randbereichen (18, 20) eine stoffschlüssige Verbindung mit den Bauteilen (10, 12) eingeht.

2. Verfahren nach Anspruch 1,
**dadurch gekennzeichnet, dass** das Zwischenteil (16) ringförmig oder lochscheibenförmig ausgebildet ist.

3. Verfahren nach Anspruch 1 oder 2,
**dadurch gekennzeichnet, dass** die Stärke des Zwischenteils (16) im Bereich von 0,1 mm bis 2 mm liegt.

4. Verfahren nach einem der vorstehenden Ansprüche,
**dadurch gekennzeichnet, dass** eine maximale Außenabmessung des Zwischenteils (16) größer ist als eine maximale Außenabmessung der Bauteile (10, 12) im Bereich der Fügestelle (14).

5. Verfahren nach einem der vorstehenden Ansprüche,
**dadurch gekennzeichnet, dass** das Zwischenteil (16) so dimensioniert wird und/oder so zwischen den Bauteilen (10, 12) positioniert wird, dass es vor dem Schweißprozess über die Bauteile (10, 12) hinausragt.

6. Verfahren nach einem der vorstehenden Ansprüche,
**dadurch gekennzeichnet, dass** beide Bauteile (10, 12) eine Messinglegierung aufweisen.

7. Verfahren nach einem der vorstehenden Ansprüche,
**dadurch gekennzeichnet, dass** die Bauteile (10, 12) zumindest im Bereich der Fügestelle (14) rotationssymmetrisch ausgebildet sind.

8. Verfahren nach einem der vorstehenden Ansprüche,
**dadurch gekennzeichnet, dass** der Laserstrahl (24) direkt auf einen freiliegenden Bereich (26) des Zwischenteils (16) gerichtet wird.

9. Verfahren nach einem der vorstehenden Ansprüche,
**dadurch gekennzeichnet, dass** der Laserstrahl (24) mittels einer Doppelfokusoptik in zwei Teilstrahlen aufgespalten wird.

10. Verfahren nach einem der vorstehenden Ansprüche,
**dadurch gekennzeichnet, dass** der Schweißprozess mittels eines defokussierten Laserstrahls (24) durchgeführt wird.

11. Verfahren nach einem der vorstehenden Ansprüche,
**dadurch gekennzeichnet, dass** der Schweißprozess mittels eines pendelnden Laserstrahls (24) durchgeführt wird.

## Claims

1. A method of joining two components (10, 12), of which at least one comprises a brass alloy, using a laser welding process,
**characterized in that**
an intermediate part (16), which is formed from a material which comprises at least one of the following alloys: CuSn4, CuSn6, CuSn8, CuSn10 and CuSn12, is arranged between the components (10, 12) such that it is in contact with the components (10, 12) in marginal regions (18, 20), and is heated using a laser beam (24) generated by a laser during the welding process such that it enters into a connection having material continuity with the components (10, 12) in the marginal regions (18, 20).

2. A method in accordance with claim 1,
**characterized in that**
the intermediate part (16) is ring-shaped or in the form of a punched disk.

3. A method in accordance with claim 1 or claim 2,
**characterized in that**
the thickness of the intermediate part (16) lies in the range from 0.1 mm to 2 mm.

4. A method in accordance with any one of the preceding claims,
**characterized in that**
a maximum outer dimension of the intermediate part (16) is larger than a maximum outer dimension of the components (10, 12) in the region of the join site (14).

5. A method in accordance with any one of the preceding claims,
**characterized in that**
the intermediate part (16) is dimensioned and/or is positioned between the components (10, 12) such that it projects beyond the components (10, 12) before the welding process.

6. A method in accordance with any one of the preceding claims,
**characterized in that**
both components (10, 12) comprise a brass alloy.

7. A method in accordance with any one of the preceding claims,
**characterized in that**
the components (10, 12) are rotationally symmetrical at least in the region of the join site (14).

8. A method in accordance with any one of the preceding claims,
**characterized in that**
the laser beam (24) is directly directed to an exposed region (26) of the intermediate part (16).

9. A method in accordance with any one of the preceding claims,
**characterized in that**
the laser beam (24) is split into two part beams using a dual-focus optics.

10. A method in accordance with any one of the preceding claims,
**characterized in that**
the welding process is carried out using a defocused laser beam (24).

11. A method in accordance with any one of the preceding claims,
**characterized in that**
the welding process is carried out using an oscillating laser beam (24).

## Revendications

1. Procédé pour assembler deux composants (10, 12), dont l'un au moins inclut un alliage de laiton, au moyen d'un processus de soudage au laser,
**caractérisé en ce que**
une pièce intermédiaire (16), qui est formée en un matériau qui inclut l'un au moins des alliages suivants : CuSn4, CuSn6, CuSn8, CuSn10 et CuSn12, est agencée entre les composants (10, 12) de telle façon qu'elle est en contact avec les composants (10, 12) dans des régions de bordure (18, 20) et, pendant le processus de soudage, elle est échauffée au moyen d'un rayon laser (24) produit par un laser de telle façon qu'elle établit une liaison à coopération de matière avec les composants (10, 12) dans les régions de bordure (18, 20).

2. Procédé selon la revendication 1,
**caractérisé en ce que** la pièce intermédiaire est réalisée en forme d'anneau ou en forme de plaque à trous.

3. Procédé selon la revendication 1 2,
**caractérisé en ce que** l'épaisseur de la pièce intermédiaire (16) est dans la plage de 0,1 mm à 2 mm.

4. Procédé selon l'une des revendications précédentes,
**caractérisé en ce qu'**une dimension extérieure maximum de la partie intermédiaire (16) est plus grande qu'une dimension extérieure maximum des composants (10, 12) dans la région de l'emplacement d'assemblage (14).

5. Procédé selon l'une des revendications précédentes,
**caractérisé en ce que** la pièce intermédiaire (16) a une dimension telle et/ou est positionnée entre les composants (10, 12) d'une manière telle qu'elle dépasse au-delà des composants (10, 12) avant le processus de soudage.

6. Procédé selon l'une des revendications précédentes,
**caractérisé en ce que** les deux composants (10, 12) incluent un alliage de laiton.

7. Procédé selon l'une des revendications précédentes,
**caractérisé en ce que** les composants (10, 12) sont réalisés à symétrie de révolution, au moins dans la région de l'emplacement d'assemblage (14).

8. Procédé selon l'une des revendications précédentes,
**caractérisé en ce que** le rayon laser (24) est dirigé directement sur une zone dégagée (26) de la pièce intermédiaire (16).

9. Procédé selon l'une des revendications précédentes,
**caractérisé en ce que** le rayon laser (24) est scindé en deux rayons partiels au moyen d'une optique à double foyer.

10. Procédé selon l'une des revendications précédentes,
**caractérisé en ce que** le processus de soudage est exécuté au moyen d'un rayon laser défocalisé (24).

11. Procédé selon l'une des revendications précédentes,
**caractérisé en ce que** le processus de soudage est exécuté au moyen d'un rayon laser pendulaire (24).
